# FASCICULE DE BREVET EUROPEEN

(11) **EP 3 994 340 B1**
(45) Date de publication et mention de la délivrance du brevet: **26.07.2023**
(21) Numéro de dépôt: 20747038.6
(22) Date de dépôt: 25.06.2020
(51) Int. Cl.: F01D 11/08, F01D 11/18, F01D 11/24, F01D 25/24, F01D 25/32

(54) **DISPOSITIF DE REFROIDISSEMENT AMELIORE D'ANNEAU DE TURBINE D'AERONEF**
VERBESSERTE KÜHLVORRICHTUNG FÜR EINEN TURBINENDECKBAND EINES FLUGEZEUGTRIEBWERKES
IMPROVED AIRCRAFT TURBINE SHROUD COOLING DEVICE

(30) Priorité: 04.07.2019 FR 1907464
(43) Date de publication de la demande: 11.05.2022
(73) Titulaire: SAFRAN AIRCRAFT ENGINES, 75015 Paris (FR)
(72) Inventeur: JARROSSAY, Clément, 77550 MOISSY-CRAMAYEL (FR); DANIS, Antoine, Claude, Michel, Etienne, 77550 MOISSY-CRAMAYEL (FR); QUENNEHEN, Lucien, Henri, Jacques, 77550 MOISSY-CRAMAYEL (FR); TABLEAU, Nicolas, Paul, 77550 MOISSY-CRAMAYEL (FR); CONGRATEL, Sébastien, Serge, Francis, 77550 MOISSY-CRAMAYEL (FR)
(74) Mandataire: Cabinet Beau de Loménie
(86) Numéro de dépôt international: PCT/FR2020/051108
(87) Numéro de publication internationale: WO 2021/001615

(56) Documents cités:
- EP-A1- 3 428 411
- EP-A2- 2 093 384
- WO-A1-2019/077265
- FR-A1- 3 040 735

## Description

### Domaine Technique

Le présent exposé concerne le domaine des turbines de turbomachine, notamment un dispositif de refroidissement de secteur d'anneau de turbine en matériau composite à matrice céramique, ainsi qu'une turbine comprenant un tel dispositif.

### Technique antérieure

Dans les turbines de turbomachine, notamment les turbines hautes pressions, mais également les turbines basses pressions, comprenant des éléments entièrement métalliques, il est nécessaire de refroidir tous les éléments et en particulier l'anneau de turbine haute ou basse pression qui est soumis aux flux les plus chauds. En particulier, ce refroidissement peut être effectué par l'intermédiaire d'un circuit de refroidissement comprenant un diffuseur permettant de refroidir l'anneau et de limiter les gradients thermiques, par impact d'un jet d'air de refroidissement sur la paroi radialement externe de cet anneau. Cet injection d'air de refroidissement dans une cavité externe à la veine d'écoulement d'air chaud permet en outre de pressuriser cette cavité, limitant ainsi le risque de réintroduction d'air chaud provenant de la veine. WO 2019/077265 A1 divulgue un exemple d'un élément de répartition d'un fluide de refroidissement d'anneau de turbine. FR 3 040 735 A1 et EP 2 093 384 A2 divulguent des autres exemples d'anneaux refroidis.

Ce refroidissement a un impact significatif sur la performance du moteur puisque le flux de refroidissement utilisé est prélevé sur le flux principal du moteur, par exemple dans un étage de compresseur haute pression. En outre, l'utilisation de métal pour l'anneau de turbine limite les possibilités d'augmenter la température au niveau de la turbine, et donc limite les possibilités d'améliorer la performance du moteur.

Afin de tenter de résoudre ces problèmes, il a été envisagé de réaliser des secteurs d'anneau de turbine en matériau composite à matrice céramique (CMC) remplaçant l'utilisation d'un matériau métallique. Les matériaux CMC présentent de bonnes propriétés mécaniques les rendant aptes à constituer des éléments de structures et conservent avantageusement ses propriétés à températures élevées. La mise en oeuvre de matériaux CMC a avantageusement permis de réduire le flux de refroidissement à imposer lors du fonctionnement et donc à augmenter la performance des turbomachines. En outre, l'utilisation de matériaux CMC permet avantageusement de diminuer la masse des turbomachines et de réduire l'effet de dilatation à chaud rencontré avec les pièces métalliques.

Afin de conserver néanmoins un refroidissement suffisant de l'anneau en CMC, tout en limitant la quantité d'air de refroidissement nécessaire, le diamètre des trous d'injection présents dans le diffuseur et permettant d'injecter l'air de refroidissement par impact de jet d'air sur la paroi de l'anneau, peut être diminué. La réduction de ce diamètre permet, à un débit donné, d'augmenter la vitesse d'impact de l'air sur l'anneau et ainsi d'améliorer l'efficacité des échanges thermiques et donc du refroidissement de l'anneau en CMC.

Cependant, le fait d'avoir des trous d'injection de plus faibles diamètres augmente le risque d'obstruction de ces trous par des particules, comme des grains de sable. Dans une telle situation d'obstruction des trous d'injection, l'anneau en CMC pourrait ne plus être refroidi suffisamment. La cavité externe à la veine d'écoulement d'air chaud pourrait de plus ne plus être suffisamment pressurisée, augmentant par conséquent le risque de réintroduction d'air chaud provenant de ladite veine, et le risque de contraintes thermiques importantes. Ces phénomènes pourraient engendrer une dégradation de l'anneau, de la turbine, et par extension, du moteur.

Dans ce contexte, il existe donc un besoin pour un dispositif permettant d'améliorer le refroidissement des pièces de turbine soumises à des gradients de températures importants, telles que les anneaux de turbines hautes ou basses pressions, sans diminuer les performances du moteur.

### Exposé de l'invention

Afin de résoudre au moins en partie les inconvénients mentionnés ci-dessus, le présent exposé concerne un dispositif de refroidissement d'anneau de turbine, comprenant :
- au moins un flasque annulaire configuré pour être fixé à une bride radiale annulaire d'une structure de support d'anneau en étant disposé en amont, par rapport à un sens de circulation d'un flux d'air, de l'anneau de turbine, et comprenant au moins un canal de circulation d'air de refroidissement,
- un diffuseur configuré pour être fixé à ladite bride radiale annulaire en aval du flasque annulaire et comprenant au moins un canal d'admission en communication fluidique avec le canal de circulation du flasque annulaire, et comprenant une cavité d'injection comprenant une pluralité de trous d'injection et étant configurée pour injecter sur une face radialement externe de l'anneau, via les trous d'injection, de l'air de refroidissement provenant du canal d'admission,
- un filtre à particules disposé sur une section d'entrée du canal de circulation du flasque annulaire, le filtre à particules comprenant une pluralité d'orifices, le diamètre de ces orifices étant inférieure au diamètre des trous d'injection du diffuseur.

Dans le présent exposé, les termes « amont » et « aval » sont définis par rapport au sens de circulation du flux d'air au sein de la turbine, ce flux d'air étant en particulier un flux d'air chaud s'écoulant dans la veine d'air délimitée par la face radialement interne de l'anneau de turbine, à l'intérieur de laquelle l'aubage de rotor est disposé. Par ailleurs, les termes « radialement interne » et « radialement externe » sont définis par rapport à la direction radiale de l'anneau, perpendiculaire à l'axe central de l'anneau.

L'anneau de turbine peut comprendre une pluralité de secteurs d'anneau, comprenant de préférence un composite à matrice céramique (CMC), et assemblés les uns aux autres de manière à former l'anneau de turbine. Le flasque annulaire est une pièce distincte de l'anneau, fixé à une bride radiale annulaire d'une structure de support d'anneau, cette structure servant elle-même à supporter l'anneau. Plus précisément, Le flasque annulaire est un flasque amont dédié à la reprise de l'effort du distributeur haute pression (DHP). Le flasque annulaire en amont de l'anneau de turbine est exempt de tout contact avec l'anneau et configuré pour faire transiter un maximum d'effort axial induit par le DHP directement dans la structure de support d'anneau sans passer par l'anneau CMC.

L'air de refroidissement peut être prélevé en amont de la turbine, par exemple au fond de la chambre de combustion, notamment une cavité de contournement de la chambre, dans une région où l'air est plus froid que l'air s'écoulant dans la veine d'écoulement d'air chaud, défini par la paroi radialement interne de l'anneau de turbine. Cet air de refroidissement est ensuite acheminé jusqu'à la section d'entrée du canal de circulation du flasque, par l'intermédiaire, par exemple, d'une canalisation s'étendant entre la région de prélèvement et ladite section d'entrée, disposée à l'extrémité amont dudit flasque. En particulier, la forte pression de l'air dans cette cavité de contournement permet de mettre l'air en circulation dans la canalisation et de l'acheminer jusqu'à la section d'entrée du flasque.

Par « en communication fluidique », on comprend que de l'air de refroidissement entrant par la section d'entrée du canal de circulation du flasque annulaire s'écoule le long du canal de circulation du flasque, puis le long du canal d'admission du diffuseur, jusqu'aux trous d'injection. On comprend en outre que la cavité d'injection du diffuseur comporte une paroi comportant les trous d'injection, cette paroi étant en vis-à-vis de la face radialement externe de l'anneau, de manière à ce que l'air présent dans la cavité d'injection du diffuseur puisse être injecté sur la face radialement externe de l'anneau. L'impact de l'air de refroidissement sur ladite face radialement externe permet ainsi de limiter l'augmentation de température de l'anneau, provoquée par l'air chaud circulant dans la veine d'air chaud, le long de la face radialement interne de l'anneau.

La présence du filtre à particules sur la section d'entrée du flasque permet d'une part, grâce à la présence des orifices, de permettre à l'air de refroidissement de pénétrer dans le canal de circulation du flasque annulaire et d'être acheminé jusqu'aux trous d'injection. D'autre part, compte tenu du fait que les orifices du filtre à particules présentent un diamètre plus faible que le diamètre des trous d'injection, des particules peuvent être bloquées par le filtre à particules avant qu'elles ne puissent atteindre le diffuseur, empêchant ainsi ces particules de venir obturer les trous d'injection. Le fait que ce filtre soit disposé sur un flasque en amont de l'anneau permet de faciliter les opérations de maintenance, au cours desquelles les filtres sont nettoyés, leur disposition étant plus accessible que les trous d'injections situés à l'intérieur du diffuseur. Ce filtrage de l'air peut également être réalisé sans qu'il soit nécessaire de modifier la structure de support d'anneau ou de l'anneau en CMC pour intégrer la fonction filtrante, ce qui permet d'éviter de modifier ces pièces à géométrie complexe et aux contraintes élevées.

Dans certains modes de réalisation, le dispositif comprend un circuit de refroidissement, le circuit de refroidissement comprenant la section d'entrée, le canal de circulation, le canal d'admission et la cavité d'injection, ledit circuit présentant une section variable et comprenant une section de calibration du débit d'écoulement d'air de refroidissement, la section de calibration étant une section de diamètre minimal du circuit de refroidissement.

A une vitesse d'écoulement donnée de l'air de refroidissement, le débit d'air de refroidissement est déterminé par la section de passage du canal dans lequel cet air de refroidissement s'écoule. Par conséquent, la section de passage du circuit de refroidissement étant variable, le débit d'écoulement est donc calibré par la section du circuit présentant la valeur la plus faible. La présence de la section de calibration, par le choix de la valeur de la section de diamètre minimale, permet ainsi de fixer un débit d'écoulement souhaité, en fonction des besoins de refroidissement de l'anneau de turbine.

Dans certains modes de réalisation, une section de passage totale de l'ensemble des orifices du filtre à particules est entre 1,5 et 5 fois supérieure à la section de calibration.

Par « section de passage totale », on comprend la somme des sections de passage de chaque orifice du filtre à particules. Il est ainsi possible d'avoir une section de passage totale au travers du filtre suffisamment supérieure à la section de calibration, et à la section totale des trous d'injection du diffuseur, de manière à ne pas restreindre le débit de refroidissement de l'anneau, tout en ayant des orifices du filtre d'un diamètre légèrement inférieur à celui des trous d'injection du diffuseur. Ainsi, entre deux nettoyages du filtre à particules, un débit d'air de refroidissement suffisant pourra être conservé, même si certains orifices du filtre à particules sont obturés. Ces particules coincées dans le filtre pourront être éliminées lors des nettoyages du moteur.

Dans certains modes de réalisation, le flasque annulaire est un premier flasque, et le canal de circulation est un premier canal, le dispositif comprenant en outre au moins un deuxième flasque annulaire configuré pour être fixé au premier flasque et à une bride radiale d'accrochage amont de l'anneau en étant intercalé entre ledit premier flasque et ladite bride radiale d'accrochage, le deuxième flasque annulaire comprenant un deuxième canal de circulation de fluide de refroidissement en communication fluidique avec le premier canal et le canal d'admission du diffuseur.

En d'autres termes, le circuit de refroidissement comprend la section d'entrée, le premier canal de circulation du premier flasque, le deuxième canal de circulation du deuxième flasque, le canal d'admission du diffuseur, puis la cavité d'injection. De préférence, le deuxième flasque est également fixé à la bride radiale annulaire de la structure de support d'anneau, en étant intercalé entre le premier flasque et ladite bride. Ainsi, le deuxième flasque est fixé à la fois à la bride radiale annulaire de la structure de support d'anneau, et à la bride radiale d'accrochage amont de l'anneau. Le deuxième flasque annulaire permet notamment d'assurer l'étanchéité axiale entre l'anneau de turbine sectorisé en CMC et le carter annulaire de la structure de support.

Dans certains modes de réalisation, le diamètre du deuxième canal de circulation est inférieur au diamètre du premier canal de circulation et définit la section de calibration.

En d'autres termes, le premier canal de circulation du premier flasque, présentant un diamètre plus important, sert d'orifice débitant permettant de traiter un maximum de particules en amont par l'intermédiaire du filtre à particules. A l'inverse, le deuxième canal de circulation du deuxième flasque, présentant un diamètre plus faible, sert d'orifice de calibration, permettant de calibrer le débit d'air de refroidissement injecté en aval via les trous d'injection du diffuseur. Les fonctions de calibration et de filtration sont ainsi réalisées par des pièces distinctes de l'anneau et de la structure de support d'anneau, sans avoir à modifier la structure du support d'anneau ou de l'anneau.

Dans certains modes de réalisation, la longueur du deuxième canal est plus faible que la longueur du premier canal. En d'autres termes, la longueur du trou calibrant est plus faible que la longueur du trou débitant. Cela permet de limiter les pertes de charge se produisant dans le deuxième canal de circulation, définissant le débit de l'écoulement.

Dans certains modes de réalisation, le filtre est soudé ou brasé sur la section d'entrée du canal de circulation.

Dans certains modes de réalisation, le filtre présente une forme ronde.

Les canaux d'écoulement de fluide de refroidissement étant de préférence de section circulaire, l'utilisation d'un filtre présentant une forme ronde analogue à celle des canaux, facilite la fabrication de ce filtre.

Dans certains modes de réalisation, le filtre comprend une portion de fixation fixée au flasque annulaire autour de la section d'entrée, et une portion de filtrage comprenant la pluralité d'orifices.

De préférence, la portion de fixation ne comporte pas d'orifice. La portion de fixation permet d'assurer le maintien du filtre contre la paroi amont du flasque annulaire, notamment du premier flasque annulaire. En d'autres termes, la portion de fixation est fixée, en étant soudée ou brasée, à la paroi amont du flasque, la surface de fixation entre la portion de fixation et le flasque entourant la section d'entrée de manière à ce que la portion de filtrage comprenant les orifices soit en vis-à-vis de ladite portion d'entrée. Cela permet d'améliorer l'efficacité du filtrage de particules.

Dans certains modes de réalisation, la portion de fixation présente une forme plane, et la portion de filtrage présente une forme convexe, la convexité étant dirigée vers l'extérieur du canal de circulation.

La surface plane de la portion de fixation permet d'augmenter la surface de contact entre ladite portion de fixation et la paroi du flasque, améliorant ainsi le maintien du filtre contre le flasque. Par ailleurs, la forme convexe, ou bombée, de la portion de filtrage du filtre permet de limiter le risque que les particules ne se plaquent contre le filtre et reste bloquées dans ses orifices. En effet, la pente de la surface du filtre, notamment de la portion de filtrage, permet de faire glisser les particules le long de cette surface, puis le long du flasque.

Dans certains modes de réalisation, l'axe des orifices du filtre est incliné par rapport à un axe central du filtre.

Lorsque le filtre présente une forme circulaire, l'axe central du filtre est l'axe passant par le centre du cercle. Lorsque le filtre est fixé sur la section d'entrée, l'axe central du filtre est coaxial avec l'axe central du premier canal de circulation. De préférence, l'axe des orifices est incliné de manière à présenter une direction opposée au sens de giration de l'écoulement de l'air dans cette zone du moteur. Cela permet de limiter le risque que les orifices de ce filtre ne se bouchent.

Dans certains modes de réalisation, les trous d'injection du diffuseur présentent un diamètre inférieur à 1 mm.

Les trous d'injection peuvent par exemple présenter un diamètre égal à 0,5 mm. Ces valeurs permettent d'obtenir une vitesse d'impact de l'air sur la paroi radialement externe de l'anneau élevée, augmentant ainsi les échanges thermiques et donc l'efficacité du refroidissement de l'anneau en CMC.

Le présent exposé concerne également un ensemble comprenant un anneau de turbine s'étendant autour d'un axe central, une structure de support d'anneau, et un dispositif de refroidissement selon l'un quelconque des modes de réalisation précédents, l'anneau de turbine comprenant une base annulaire ayant une face radialement interne, définissant une veine d'écoulement d'air, une face radialement externe, et deux brides radiales d'accrochage disposées aux extrémités amont et aval, selon l'axe central, de la base annulaire.

L'anneau de turbine est de préférence en CMC.

Le présent exposé concerne également une turbine comprenant l'ensemble selon le présent exposé, la turbine pouvant être une turbine haute ou basse pression.

Le présent exposé concerne également une turbomachine comprenant la turbine selon le présent exposé.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 est une vue en perspective d'un ensemble d'anneau de turbine selon le présent exposé ;
[Fig. 2] La figure 2 représente une vue en coupe éclatée d'un dispositif de refroidissement d'anneau de turbine selon le présent exposé ;
[Fig. 3A-3B] La figure 3A représente une vue en perspective d'un diffuseur, et la figure 3B représente une vue du diffuseur de la figure 3A selon la direction IIIB ;
[Fig. 4] La figure 4 représente une vue en perspective agrandie de l'ensemble d'anneau de la figure 1, notamment du premier flasque annulaire, sans filtre à particule ;
[Fig. 5] La figure 5 représente une vue en perspective agrandie de l'ensemble d'anneau de la figure 1, notamment du premier flasque annulaire, avec un filtre à particule ;
[Fig. 6A-6C] La figure 6A représente une vue en perspective d'un filtre à particules selon un premier mode de réalisation, la figure 6B représente une vue en perspective d'un filtre à particules selon un deuxième mode de réalisation, la figure 6C représente une vue en perspective d'un filtre à particule selon un troisième mode de réalisation ;
[Fig. 7] La figure 7 représente une vue en coupe, selon le plan de coupe VII-VII, du filtre à particules de la figure 6B ;
[Fig. 8] La figure 8 représente une vue en coupe, selon le plan de coupe VIII-VIII, du filtre à particules de la figure 6C.

### Description des modes de réalisation

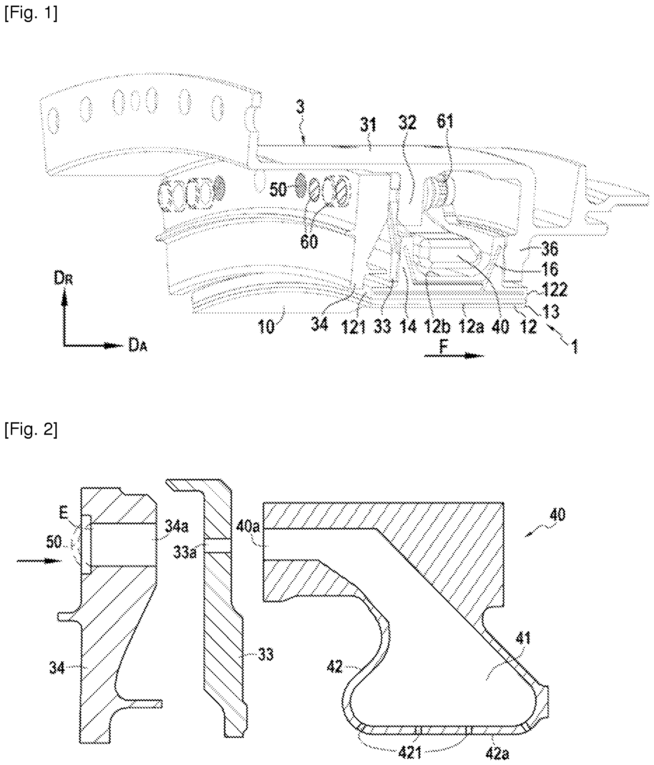

La suite de la description fait référence à une turbine haute pression. Néanmoins, cet exemple n'est pas limitatif, l'invention pouvant notamment s'appliquer à une turbine basse pression. La figure 1 montre un ensemble d'anneau de turbine haute pression comprenant un anneau de turbine 1 en matériau composite à matrice céramique (CMC) et une structure métallique de support d'anneau 3. L'anneau de turbine 1 entoure un ensemble de pales rotatives (non représentées). L'anneau de turbine 1 est formé d'une pluralité de secteurs d'anneau 10, dont un seul est visible sur la figure 1. La flèche D_{A} indique la direction axiale de l'anneau de turbine 1 tandis que la flèche D_{R} indique la direction radiale de l'anneau de turbine 1. Pour des raisons de simplification de présentation, la figure 1 est une vue partielle de l'anneau de turbine 1 qui est en réalité un anneau complet.

Chaque secteur d'anneau 10 présente, selon un plan défini par les directions axiale D_{A} et radiale D_{R}, une section sensiblement en forme de la lettre grecque π inversée. La section comprend en effet une base annulaire 12 et des brides, ou pattes radiales annulaire d'accrochage amont et aval, respectivement 14 et 16. Les termes "amont" et "aval" sont utilisés ici en référence au sens d'écoulement du flux gazeux dans la turbine représenté par la flèche F sur la figure 1. Les pattes du secteur d'anneau pourraient avoir une autre forme, la section du secteur d'anneau présentant une autre forme que π, comme par exemple une forme en K ou en O.

La base annulaire 12 comporte, suivant la direction radiale D_{R} de l'anneau 1, une face interne 12a et une face externe 12b opposées l'une à l'autre. La face interne 12a de la base annulaire 12 est revêtue d'une couche 13 de matériau abradable pour définir une veine d'écoulement de flux gazeux dans la turbine. Les termes "interne" et "externe" sont utilisés ici en référence à la direction radiale D_{R} dans la turbine.

Les brides radiales d'accrochage amont et aval 14 et 16 s'étendent en saillie, suivant la direction D_{R}, à partir de la face externe 12b de la base annulaire 12 à distance des extrémités amont et aval 121 et 122 de la base annulaire 12. Les brides radiales d'accrochage amont et aval 14 et 16 s'étendent sur toute la largeur du secteur d'anneau 10, c'est-à-dire sur tout l'arc de cercle décrit par le secteur d'anneau 10, ou encore sur toute la longueur circonférentielle du secteur d'anneau.

Comme cela est illustré sur la figure 1, la structure de support d'anneau 3, qui est solidaire d'un carter de turbine, comprend une virole centrale 31, s'étendant dans la direction axiale D_{A}, et ayant un axe de révolution confondu avec l'axe de révolution de l'anneau de turbine 1 lorsqu'ils sont fixés ensemble, ainsi qu'une première bride radiale annulaire 32 et une seconde bride radiale annulaire 36, la première bride radiale annulaire 32 étant positionnée en amont de la seconde bride radiale annulaire 36.

La seconde bride radiale annulaire 36 s'étend dans la direction circonférentielle de l'anneau 1 et, suivant la direction radiale D_{R}, depuis la virole centrale 31 vers le centre de l'anneau 1. La seconde bride radiale annulaire 36 est au contact de la bride radiale d'accrochage aval 16 et est fixée à celle-ci.

La première bride radiale annulaire 32 s'étend dans la direction circonférentielle de l'anneau 1 et, suivant la direction radiale D_{R}, depuis la virole centrale 31 vers le centre de l'anneau 1.

L'anneau de turbine 1 comprend un premier flasque annulaire 34 et un second flasque annulaire 33, les deux flasques annulaires 33 et 34 étant fixés de manière amovible sur la première bride radiale annulaire 32. Les premier et second flasques annulaire 33 et 34 sont disposés en amont de l'anneau de turbine 1 par rapport au sens F d'écoulement du flux gazeux dans la turbine.

Le second flasque annulaire 33 est disposé en aval du premier flasque annulaire 34. Le premier flasque annulaire 34 et le second flasque annulaire 33 peuvent être sectorisés en une pluralité de secteurs d'anneau ou être en une seule pièce.

Une portion du deuxième flasque 33 est en appui sur la bride radiale d'accrochage amont 14 du secteur d'anneau 10 et fixée à cette bride. Les deux flasques 33 et 34 sont fixés de manière amovible sur la bride radiale annulaire amont 32 à l'aide de vis 60 et d'écrous 61 de fixation, les vis 60 traversant des orifices prévus respectivement dans les deux flasques amonts 33 et 34 ainsi que dans la bride radiale annulaire amont 32.

Le premier flasque annulaire 34 permet la reprise de l'effort du distributeur haute pression (DHP) sur l'ensemble d'anneau en faisant transiter cet effort vers la ligne carter qui est plus robuste mécaniquement, c'est-à-dire vers la ligne de la structure de support d'anneau 3.

La face externe 12b et les brides 14, 16 forment une cavité hors veine, autrement dit une cavité externe à la veine d'écoulement d'air chaud F. Du fait de la présence d'air à température élevée côté veine, la paroi 12 est soumise à des gradients thermiques importants. Par ailleurs, les pressions élevées existant dans la veine d'écoulement d'air chaud F augmentent le risque de fuite d'air chaud, notamment au niveau des jonctions entre les secteurs d'anneau 10. L'injection d'un air de refroidissement dans la cavité hors veine permet ainsi de refroidir la paroi 12 de l'anneau et diminuer les gradients thermiques dans celle-ci, et également d'augmenter la pression dans la cavité hors veine, limitant ainsi le risque de fuite de l'air chaud F s'écoulant dans la veine.

Pour ce faire, l'ensemble comprend un dispositif de refroidissement, lui-même comprenant notamment le premier et le deuxième flasque 33, 34, et un diffuseur 40 disposé dans la cavité hors veine. En particulier, outre les orifices permettant la fixation des flasques 33, 34 et le passage des vis 60, les flasques 33, 34 comprennent également des orifices définissant un canal d'écoulement d'air de refroidissement.

Plus précisément, le premier flasque annulaire 34 comprend un premier canal de circulation 34a, et le deuxième flasque annulaire 33 comprend un deuxième canal de circulation 33a. Le premier et le deuxième canal 34a, 33a sont coaxiaux l'un avec l'autre. De préférence, le diamètre du deuxième canal 33a est inférieur au diamètre du premier canal 34a.

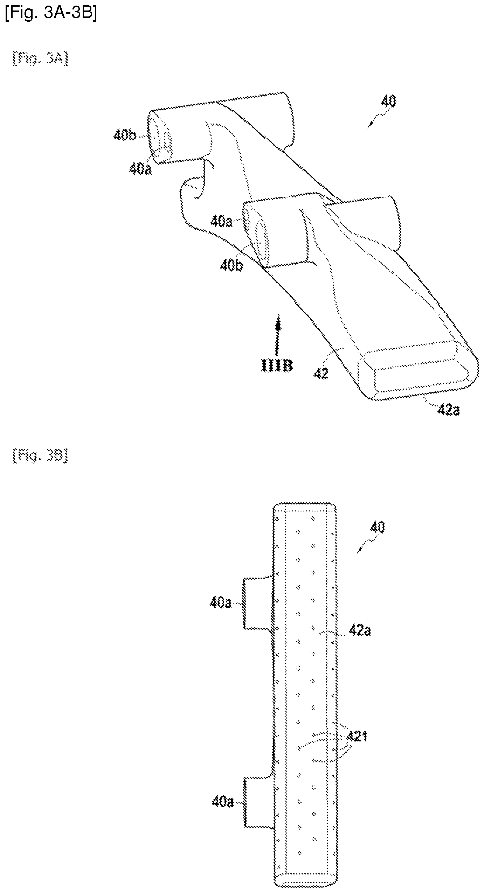

Le diffuseur 40 comprend un canal d'admission 40a en communication fluidique avec une cavité d'injection 41. La figure 3A présente une vue en perspective d'un diffuseur 40. Dans cet exemple, le diffuseur 40 comprend deux orifices 40b de fixation, permettant de fixer le diffuseur 40 à la bride radiale annulaire amont 32, par l'intermédiaire des vis 60 servant également à la fixation des flasques 33, 34, ou directement sur le deuxième flasque 33, en passant par un passage formé dans la bride radiale annulaire amont 32 le long de la circonférence du support d'anneau 3. Dans cet exemple, le diffuseur 40 comprend deux canaux d'admission 40a, chacun coaxial avec un deuxième canal 33a du deuxième flasque 33 et en communication fluidique avec celui-ci. La cavité d'injection 41 est délimitée par une enveloppe 42 de forme sensiblement incurvée dans la direction circonférentielle, de manière à épouser la forme de la face externe 12b de l'anneau 12. Plus précisément, une paroi 42a, disposée sous le diffuseur 40 selon la direction radiale, est en vis-à-vis avec la face externe 12b, et s'étend circonférentiellement de manière sensiblement parallèle à cette face externe 12b.

La figure 3B présente une vue de dessous du diffuseur 40 de la figure 3A. La paroi 42a comporte une pluralité de trous d'injection 421. Dans cet exemple, ces trous d'injection 421 présentent un diamètre compris entre 0,1 et 1 mm, par exemple 0,5 mm. L'air présent dans la cavité d'injection 41 est ainsi injecté par impact de jet d'air contre la face externe 12b, par l'intermédiaire de ces trous d'injection 421.

Plus précisément, l'air de refroidissement est prélevé en amont dans le moteur, par exemple en fond de la chambre de combustion, et est acheminé jusqu'à la section d'entrée E du ou des premiers canaux 34a (cf. flèche sur la figure 2). Il s'écoule ensuite le long du ou des premiers canaux 34a, le long du ou des deuxièmes canaux 33a, le long du ou des canaux d'admission 40a, puis dans la cavité d'injection 41 du diffuseur 40. La pression existant dans la cavité d'injection 41 permet alors l'injection de l'air de refroidissement par l'intermédiaire des trous d'injection 421.

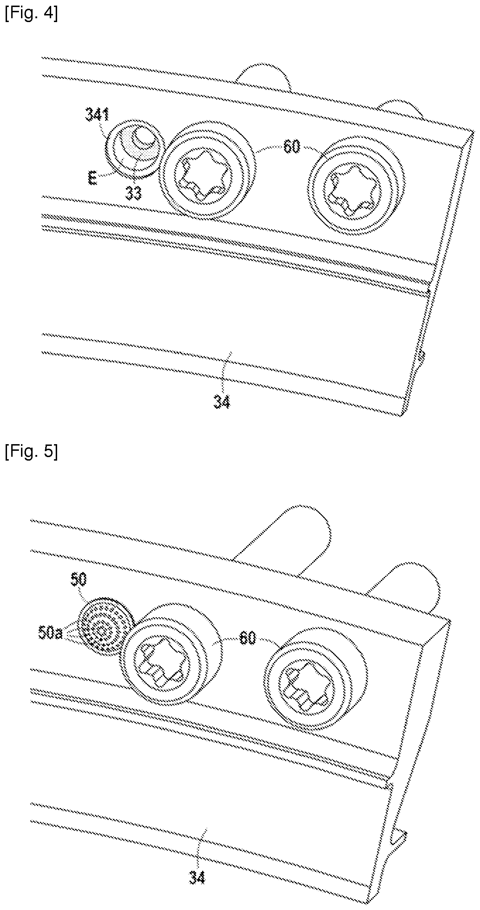

La figure 4 présente une vue agrandie de la section d'entrée E d'un premier canal de circulation 34a du premier flasque 34. La figure 4 présente une configuration dans laquelle la section d'entrée E ne comprend pas de filtre. Par soucis de simplification, seul le premier flasque 34, et une partie du deuxième flasque 33 visible à travers le premier canal de circulation 34a sont représentés, les autres éléments de l'ensemble étant occultés. La face amont du premier flasque 34 comporte un épaulement 341 autour de la section d'entrée E et délimitant celle-ci.

La figure 5 présente une configuration dans laquelle un filtre à particule 50 est disposé sur la section d'entrée E. Plus précisément, le filtre à particule 50 peut être une plaque circulaire d'un diamètre lui permettant de s'insérer dans l'épaulement 341, et fixée en étant soudée ou brasée sur la face amont du premier flasque 34, en étant insérée dans ledit épaulement 341.

Par ailleurs, le filtre à particule 50 comprend une pluralité d'orifices 50a. Le nombre et la section de ces orifices sont déterminés de manière à maîtriser un débit d'air permettant un refroidissement de la face externe 12b, en empêchant les particules dont les dimensions sont supérieures au diamètre des trous d'injection 421, de pénétrer dans la premier canal 34a, et donc d'être acheminées jusqu'à la cavité d'injection 41. Plus précisément, le débit d'air de refroidissement traversant la section de calibration de l'écoulement, c'est-à-dire la section du deuxième canal de circulation 33a, doit rester maîtrisé entre deux opérations de maintenance du dispositif, au cours desquelles le filtre est nettoyé.

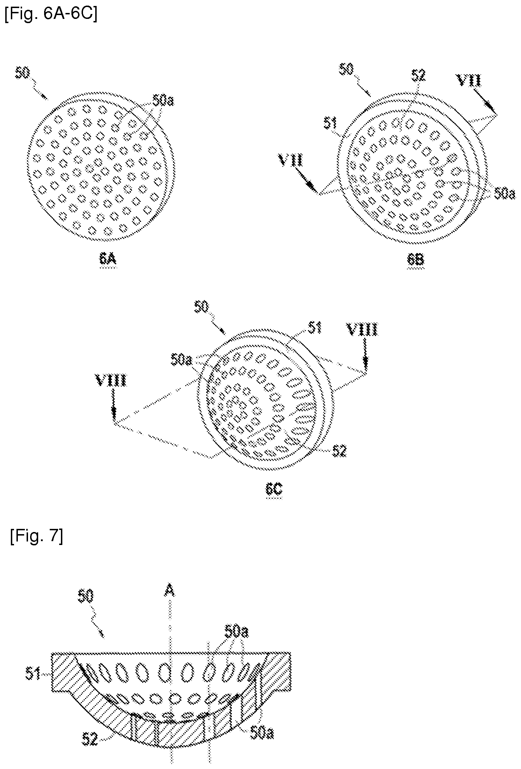

La figure 6A présente un premier mode de réalisation dans lequel le filtre 50 est plat. La figure 6B présente un deuxième mode de réalisation du filtre à particule 50 du présent exposé. Dans ce deuxième mode de réalisation, le filtre 50 comprend une portion de fixation 51 de forme plane, permettant la fixation du filtre 50 sur la face amont du premier flasque 34, notamment au fond de l'épaulement 341. Le filtre 50 comprend en outre une portion de filtration 52 comprenant les orifices 50a. La portion de filtration 52 présente une forme convexe, ou bombée, permettant de limiter le risque que les particules ne se plaquent contre le filtre 50, en favorisant le glissement des particules le long de cette surface bombée, puis le long du premier flasque 34. La figure 7 présente une vue en coupe du filtre à particule 50 de ce deuxième mode de réalisation. Selon ce mode de réalisation, l'axe des orifices 50a est sensiblement parallèle à l'axe central A du filtre 50, autrement dit à l'axe du premier canal 34a.

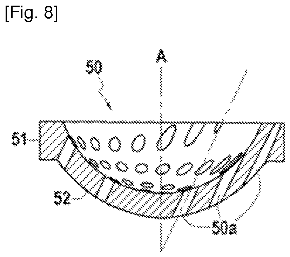

La figure 6C présente un troisième mode de réalisation du filtre à particule 50 du présent exposé. Le filtre 50 de ce troisième mode de réalisation est analogue au filtre 50a du deuxième mode de réalisation, mais diffère de ce dernier en ce que l'axe des orifices 50a est incliné par rapport à l'axe central A du filtre 50, comme cela est visible sur la figure 8. De préférence, l'axe des orifices 50a est orienté selon une direction opposée à la giration de l'air dans cette zone du moteur, de manière à limiter l'obstruction des orifices 50a. De manière alternative, ce troisième mode de réalisation peut être combiné avec les caractéristiques du premier mode de réalisation. En d'autres termes, le filtre 50 peut présenter une forme plate, les orifices 50a étant inclinés par rapport à l'axe central A.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif de refroidissement d'un anneau de turbine (1), comprenant :
- au moins un flasque annulaire (33, 34) configuré pour être fixé à une bride radiale annulaire (32) d'une structure de support d'anneau (3) en étant disposé en amont de l'anneau de turbine (1), et comprenant au moins un canal de circulation (33a, 34a) d'air de refroidissement,
- un diffuseur (40) configuré pour être fixé à ladite bride radiale annulaire (32) en aval du flasque annulaire (33, 34) et comprenant au moins un canal d'admission (40a) en communication fluidique avec le canal de circulation (33a, 34a) du flasque annulaire (33, 34), et comprenant une cavité d'injection (41) comprenant une pluralité de trous d'injection (421) et étant configurée pour injecter sur une face radialement externe (12b) de l'anneau (10), via les trous d'injection (421), de l'air de refroidissement provenant du canal d'admission (40a),
- le dispositif de refroidissement étant **caractérisé en ce qu'**il comprend en outre un filtre à particules (50) disposé sur une section d'entrée (E) du canal de circulation (33a, 34a) du flasque annulaire (33, 34), le filtre à particules (50) comprenant une pluralité d'orifices (50a), le diamètre de ces orifices (50a) étant inférieur au diamètre des trous d'injection (421) du diffuseur (40).

2. Dispositif selon la revendication 1, comprenant un circuit de refroidissement, le circuit de refroidissement comprenant la section d'entrée (E), le canal de circulation (33a, 34a), le canal d'admission (40a) et la cavité d'injection (41), ledit circuit présentant une section variable et comprenant une section de calibration du débit d'écoulement d'air de refroidissement, la section de calibration étant une section de diamètre minimal du circuit de refroidissement.

3. Dispositif selon la revendication 1 ou 2, dans lequel une section de passage totale de l'ensemble des orifices (50a) du filtre à particules (50) est entre 1,5 et 5 fois supérieure à la section de calibration.

4. Dispositif selon l'une quelconque des revendications 1 à 3, dans lequel le flasque annulaire est un premier flasque (34), et le canal de circulation est un premier canal (34a), le dispositif comprenant en outre au moins un deuxième flasque annulaire (33) configuré pour être fixé au premier flasque (34) et à une bride radiale d'accrochage amont (14) de l'anneau (10) en étant intercalé entre ledit premier flasque (34) et ladite bride radiale d'accrochage amont (14), le deuxième flasque annulaire (33) comprenant un deuxième canal de circulation (33a) de fluide de refroidissement en communication fluidique avec le premier canal (34a) et le canal d'admission (40a) du diffuseur (40).

5. Dispositif selon la revendication 4, dans lequel le diamètre du deuxième canal de circulation (33a) est inférieur au diamètre du premier canal de circulation (34a) et définit la section de calibration.

6. Dispositif selon l'une quelconque des revendications 1 à 5, dans lequel le filtre à particules (50) présente une forme ronde.

7. Dispositif selon l'une quelconque des revendications 1 à 6, dans lequel le filtre à particules (50) comprend une portion de fixation (51) fixée au flasque annulaire (33a, 34a) autour de la section d'entrée (E), et une portion de filtrage (52) comprenant la pluralité d'orifices (50a).

8. Dispositif selon la revendication 7, dans lequel la portion de fixation (51) présente une forme plane, et la portion de filtrage (52) présente une forme convexe, la convexité étant dirigée vers l'extérieur du canal de circulation (33a, 34a).

9. Dispositif selon l'une quelconque des revendications 1 à 8, dans lequel l'axe des orifices (50a) du filtre (50) est incliné par rapport à un axe central (A) du filtre (50).

10. Ensemble comprenant un anneau de turbine (1) s'étendant autour d'un axe central, une structure de support d'anneau (3), et un dispositif de refroidissement selon l'une quelconque des revendications précédentes, l'anneau de turbine (1) comprenant une base annulaire (12) ayant une face radialement interne (12a), définissant une veine d'écoulement d'air (F), une face radialement externe (12b), et deux brides radiales d'accrochage (14, 16) disposées aux extrémités amont et aval, selon l'axe central, de la base annulaire (12).

11. Turbine comprenant l'ensemble selon la revendication 10.

## Patentansprüche

1. Kühlvorrichtung für ein Turbinendeckband (1), umfassend:
- mindestens einen ringförmigen Flansch (33, 34), der dazu ausgelegt ist, an einem ringförmigen radialen Bund (32) einer deckbandtragenden Struktur (3) befestigt zu sein, indem er dem Turbinendeckband (1) vorgelagert angeordnet ist und mindestens einen Kühlluft-Zirkulationskanal (33a, 34a) umfasst,
- einen Diffusor (40), der dazu ausgelegt ist, dem ringförmigen Flansch (33, 34) nachgelagert an dem ringförmigen radialen Bund (32) befestigt zu sein und mindestens einen Eintrittskanal (40a) in Fluidkommunikation mit dem Zirkulationskanal (33a, 34a) des ringförmigen Flanschs (33, 34) umfasst und einen Einblashohlraum (41) umfasst, der eine Vielzahl von Einblaslöchern (421) umfasst und ausgelegt ist, um über eine radial äußere Fläche (12b) des Deckbands (10) durch die Einblaslöcher (421) Kühlluft einzublasen, die vom Eintrittskanal (40a) kommt,
- wobei die Kühlvorrichtung **dadurch gekennzeichnet ist, dass** sie ferner einen Partikelfilter (50) umfasst, der auf einem Einlassquerschnitt (E) des Zirkulationskanals (33a, 34a) des ringförmigen Flanschs (33, 34) angeordnet ist, wobei der Partikelfilter (50) eine Vielzahl von Öffnungen (50a) umfasst, wobei der Durchmesser dieser Öffnungen (50a) kleiner als der Durchmesser der Einblaslöcher (421) des Diffusors (40) ist.

2. Vorrichtung nach Anspruch 1, die einen Kühlkreis umfasst, wobei der Kühlkreis den Einlassquerschnitt (E), den Zirkulationskanal (33a, 34a), den Eintrittskanal (40a) und den Einblashohlraum (41) umfasst, wobei der Kreis einen variablen Querschnitt aufweist und einen Querschnitt zum Kalibrieren des Kühlluft-Strömungsdurchsatzes umfasst, wobei der Kalibrierquerschnitt ein Querschnitt eines minimalen Durchmessers des Kühlkreises ist.

3. Vorrichtung nach Anspruch 1 oder 2, wobei ein Gesamtdurchgangsquerschnitt der Gesamtheit der Öffnungen (50a) des Partikelfilters (50) zwischen 1,5- und 5-mal größer als der Kalibrierquerschnitt ist.

4. Vorrichtung nach einem der Ansprüche 1 bis 3, wobei der ringförmige Flansch ein erster Flansch (34) ist und der Zirkulationskanal ein erster Kanal (34a) ist, wobei die Vorrichtung ferner mindestens einen zweiten ringförmigen Flansch (33) umfasst, der dazu ausgelegt ist, am erster Flansch (34) und an einem vorgelagerten radialen Verankerungsbund (14) des Deckbands (10) befestigt zu sein, indem er zwischen dem ersten Flansch (34) und dem vorgelagerten radialen Verankerungsbund (14) angeordnet ist, wobei der zweite ringförmige Flansch (33) einen zweiten Kühlfluid-Zirkulationskanal (33a) in Fluidkommunikation mit dem ersten Kanal (34a) und dem Eintrittskanal (40a) des Diffusors (40) umfasst.

5. Vorrichtung nach Anspruch 4, wobei der Durchmesser des zweiten Zirkulationskanals (33a) kleiner als der Durchmesser des ersten Zirkulationskanals (34a) ist und den Kalibrierquerschnitt definiert.

6. Vorrichtung nach einem der Ansprüche 1 bis 5, wobei der Partikelfilter (50) eine runde Form aufweist.

7. Vorrichtung nach einem der Ansprüche 1 bis 6, wobei der Partikelfilter (50) einen Befestigungsabschnitt (51) umfasst, der am ringförmigen Flansch (33a, 34a) um den Einlassquerschnitt (E) befestigt ist, und einen Filterabschnitt (52), der die Vielzahl von Öffnungen (50a) umfasst.

8. Vorrichtung nach Anspruch 7, wobei der Befestigungsabschnitt (51) eine ebene Form aufweist und der Filterabschnitt (52) eine konvexe Form aufweist, wobei die Konvexität nach außerhalb des Zirkulationskanals (33a, 34a) gerichtet ist.

9. Vorrichtung nach einem der Ansprüche 1 bis 8, wobei die Achse der Öffnungen (50a) des Filters (50) im Verhältnis zu einer zentralen Achse (A) des Filters (50) geneigt ist.

10. Anordnung, die ein Turbinendeckband (1), das sich um eine zentrale Achse erstreckt, eine deckbandtragenden Struktur (3) und eine Kühlvorrichtung nach einem der vorangehenden Ansprüche umfasst, wobei das Turbinendeckband (1) eine ringförmige Basis (12) mit einer radial inneren Fläche (12a), die eine Luftströmungsbahn (F) definiert, eine radial äußere Fläche (12b) und zwei radiale Verankerungsbünde (14, 16) umfasst, die am gemäß der zentralen Achse vorgelagerten und nachgelagerten Ende der ringförmigen Basis (12) angeordnet sind.

11. Turbine, welche die Anordnung nach Anspruch 10 umfasst.

## Claims

1. A device for cooling a turbine shroud (1) comprising:
- at least one annular flange (33, 34) configured to be attached to an annular radial collar (32) of a shroud support structure (3) being arranged upstream of the turbine shroud (1) and comprising at least one cooling air circulation channel (33a, 34a),
- a diffuser (40) configured to be attached to said annular radial collar (32) downstream of the annular flange (33, 34) and comprising at least one intake channel (40a) in fluid communication with the circulation channel (33a, 34a) of the annular flange (33, 34), and comprising an injection cavity (41) comprising a plurality of injection holes (421) and being configured to inject cooling air originating in the intake channel (40a) on a radially external face (12b) of the shroud (10), via the injection holes (421),
- the device for cooling being **characterized in that** it further comprises a particle filter (50) arranged on an inlet section (E) of the circulation channel (33a, 34a) of the annular flange (33, 34), the particle filter (50) comprising a plurality of openings (50a), the diameter of these openings (50a) being less than the diameter of the injection holes (421) of the diffuser (40).

2. The device according to claim 1, comprising a cooling circuit, the cooling circuit comprising the inlet section (E), the circulation channel (33a, 34a), the intake channel (40a) and the injection cavity (41), said circuit having a variable cross section and comprising a calibration section of the flow rate of cooling air, the calibration section being a section of minimum diameter of the cooling circuit.

3. The device according to claim 1 or 2, wherein a total passage cross section of all the openings (50a) of the particle filter (50) is between 1.5 and 5 times greater than the calibration section.

4. The device according to any one of claims 1 to 3, wherein the annular flange is a first flange (34), and the circulation channel is a first channel (34a), the device also comprising at least one second annular flange (33) configured to be attached to the first flange (34) and to an upstream radial fastening collar (14) of the shroud (10) being interleaved between said first flange (34) and said upstream radial fastening collar (14), the second annular flange (33) comprising a second circulation channel (33a) for cooling fluid in fluid communication with the first channel (34a) and the intake channel (40a) of the diffuser (40).

5. The device according to claim 4, wherein the diameter of the second circulation channel (33a) is less than the diameter of the first circulation channel (34a) and defines the calibration section.

6. The device according to any one of claims 1 to 5, wherein the particle filter (50) has a round shape.

7. The device according to any one of claims 1 to 6, wherein the particle filter (50) comprises an attachment portion (51) attached to the annular flange (33a, 34a) around the inlet section (E), and a filtering portion (52) comprising the plurality of openings (50a).

8. The device according to claim 7, wherein the attachment portion (51) has a planar shape, and the filtering portion (52) has a convex shape, the convexity being directed toward the outside of the circulation channel (33a, 34a).

9. The device according to any one of claims 1 to 8, wherein the axis of the openings (50a) of the filter (50) is inclined relative to a central axis (A) of the filter (50).

10. An assembly comprising a turbine shroud (1) extending around a central axis, a shroud support structure (3) and a cooling device according to any one of the preceding claims, the turbine shroud (1) comprising an annular base (12) having a radially internal face (12a), defining an air flow stream (F), a radially external face (12b) and two radial fastening collars (14, 16) arranged at the upstream and downstream ends, along the central axis, of the annular base (12).

11. A turbine comprising the assembly according to claim 10.
